# FASCICULE DE BREVET EUROPEEN

(11) **EP 3 033 530 B1**
(45) Date de publication et mention de la délivrance du brevet: **09.05.2018**
(21) Numéro de dépôt: 14790174.8
(22) Date de dépôt: 04.08.2014
(51) Int. Cl.: F04D 29/54, F01D 5/14, F01D 9/04

(54) **AUBE DE REDRESSEUR DE TURBOMACHINE**
LEITRADSCHAUFEL EINER TURBOMASCHINE
TURBOMACHINE STATOR VANE

(30) Priorité: 12.08.2013 FR 1357956
(43) Date de publication de la demande: 22.06.2016
(73) Titulaire: SNECMA, 75015 Paris (FR)
(72) Inventeur: COJANDE, Pradeep, F-77550 Moissy-Cramayel Cedex (FR); LIPPINOIS, Eric, Pierre, Maurice, F-77550 Moissy-Cramayel Cedex (FR); REISS, Hanna, F-77550 Moissy-Cramayel Cedex (FR)
(74) Mandataire: Intès, Didier Gérard André
(86) Numéro de dépôt international: PCT/FR2014/052027
(87) Numéro de publication internationale: WO 2015/022463

(56) Documents cités:
- EP-A2- 1 983 160
- GB-A- 2 004 599
- US-A1- 2008 159 856
- US-A1- 2010 209 235

## Description

### Arrière-plan de l'invention

L'invention concerne une aube de redresseur de turbomachine, un redresseur de turbomachine comprenant une pluralité d'aubes de redresseur et une turbomachine comprenant au moins un tel redresseur.

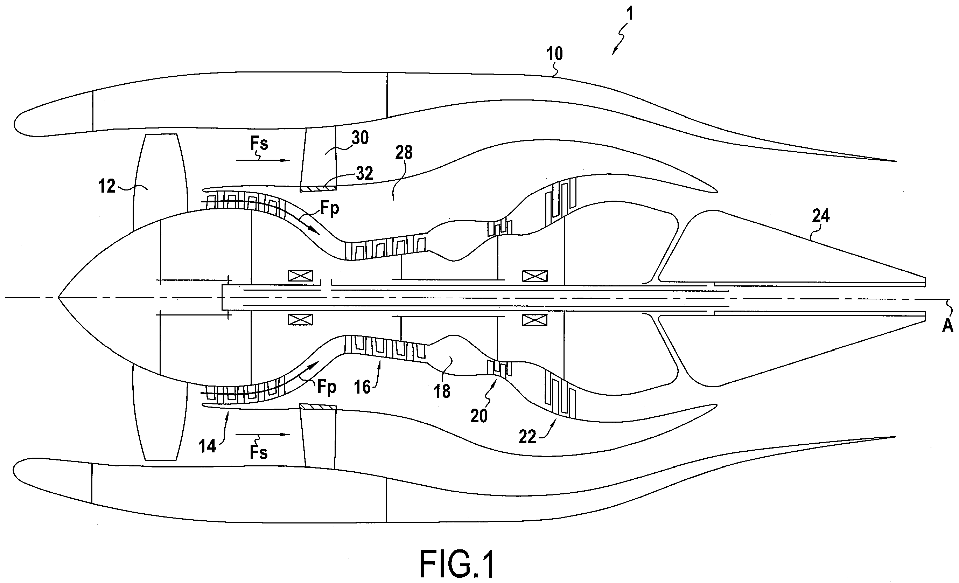

Une turbomachine 1 à double flux pour la propulsion d'un aéronef est représentée sur la figure 1, en coupe selon un plan vertical passant par son axe principal A. Cette turbomachine comprend un carter extérieur 10 dans lequel sont disposés, de l'amont vers l'aval dans le sens de la circulation d'air, une soufflante 12, un compresseur basse pression 14, un compresseur haute pression 16, une chambre de combustion 18, une turbine haute pression 20, une turbine basse pression 22 et un cône d'échappement 24.

Un carter intérieur 28 est disposé dans le carter extérieur 10, autour des compresseurs 14 et 16, de la chambre de combustion 18 et des turbines 20 et 22. Un redresseur 30 s'étend en aval de la soufflante 12, entre les carters 28 et 10, en étant en l'espèce disposé dans la région des compresseurs 14 et 16.

En fonctionnement, le carter intérieur 28 divise le flux d'air accéléré par la soufflante 12 entre un flux primaire Fp qui alimente les compresseurs 14 et 16, et un flux secondaire Fs qui s'écoule entre les carters 28 et 10 et est ainsi éjecté de la turbomachine après avoir franchi le redresseur 30 pour fournir une partie de la poussée.

Le redresseur, également désigné par l'acronyme OGV pour l'anglais « Outlet Guide Vane », comprend une pluralité d'aubes disposées en couronne autour d'un anneau 32 porté par le carter intérieur 28. Le redresseur permet de redresser le flux d'air en sortie de la soufflante.

Pour une meilleure efficacité du redresseur, ses aubes doivent avoir de bonnes performances aérodynamiques et, en particulier, limiter les pertes à la traversée de la couronne de redresseur.

Par ailleurs, sous l'effet du flux d'air, les aubes du redresseur subissent des contraintes élevées qui, en particulier provoquent des phénomènes de torsion et de flexion de ces aubes. La torsion d'une aube est sa déformation sur elle-même, autour de son axe d'empilement. La flexion de l'aube est sa déformation autour de l'axe tangentiel tangent à la rotation de la soufflante, et donc à l'anneau 32.
Ces phénomènes de torsion et de flexion sont analysés par le paramètre de couplage entre torsion et flexion ou TBC, acronyme de l'anglais « Twist Bend Coupling ». Le TBC en un point d'une aube est le rapport entre l'amplitude de la torsion et l'amplitude de la flexion en ce point. Le TBC des aubes de redresseur est révélateur de leur tendance au flottement en fonctionnement. Il doit être acceptable du point de vue de l'opérabilité de la turbomachine et de son comportement aérodynamique.

Il importe donc de faire en sorte que l'efficacité accrue des performances aérodynamiques ne dégrade pas le TBC par rapport au TBC cible, déterminé en phase de calculs de dimensionnement de la turbomachine.

Le document US 2008/159856 divulgue une aube de redresseur selon le préambule de la revendication 1.

### Objet et résumé de l'invention

L'invention vise à proposer une aube de redresseur qui permette à la fois de favoriser une bonne répartition du flux d'air sur la hauteur des aubes avec une performance aérodynamique accrue, et d'éviter une dégradation de leur comportement en termes de torsion et de flexion, par rapport à des aubes classiques.

L'invention a pour objet une aube de redresseur de turbomachine comportant une pluralité de sections d'aube empilées entre un pied et une tête selon un axe radial Z qui définit la direction de la hauteur de l'aube, chaque section d'aube :
- s'étendant selon un axe longitudinal X entre un bord d'attaque et un bord de fuite et selon un axe tangentiel Y entre une face intrados et une face extrados,
- ayant une corde définie par la longueur du segment qui s'étend à partir du bord d'attaque jusqu'au bord de fuite,
- ayant une épaisseur, définie par la distance entre les faces intrados et extrados, qui varie le long de la corde,
des coordonnées adimensionnées x' et z' étant définies pour chaque point de l'aube de coordonnées x, y, z selon les axes X, Y, Z, par les quotients x/Ht et z/Ht, où Ht représente la hauteur totale de l'aube, le bord d'attaque de l'aube à sa hauteur totale Ht définissant une coordonnée d'origine x'=0 à partir de laquelle la coordonnée x' augmente en allant vers le bord de fuite,
caractérisée en ce que, sur une portion inférieure de l'aube allant de z'=0 à z'= 0,5, la coordonnée x' du bord d'attaque est négative et les épaisseurs maximales sont mesurées à des positions éloignées du bord d'attaque d'au moins 50% de la corde.

Ainsi, le bord d'attaque de l'aube est « mis en avant » sur la portion inférieure de l'aube c'est-à-dire que, sur la portion inférieure, le bord d'attaque est en avancée vers l'amont, par rapport à sa position à l'extrémité radialement externe de l'aube, à laquelle sa hauteur totale est mesurée. Comme on le verra dans la suite, ceci permet une meilleure répartition du débit d'air sur la hauteur de l'aube. Dans le même temps, sur la portion inférieure, les zones d'épaisseur maximale des différentes sections d'aube sont éloignées du bord d'attaque, ce qui permet de limiter les phénomènes de torsion et, en particulier, les phénomènes de flexion de l'aube.

Selon des variantes, l'aube présente une ou plusieurs des caractéristiques suivantes :
- pour la section de coordonnée z'=0, la coordonnée x' est inférieure ou égale à -0,15.
- la coordonnée x' est inférieure ou égale à -0,1 sur une portion de l'aube allant de z'=0 à z'=0,3.
- la coordonnée x' augmente continûment sur la portion inférieure de l'aube, à mesure que la coordonnée z' augmente.
- pour la section de coordonnée z'=0, l'épaisseur maximale est mesurée à une position éloignée du bord d'attaque d'au moins 60% de la corde.
- l'épaisseur maximale est mesurée à une position éloignée du bord d'attaque d'au moins 60% de la corde sur une portion de l'aube allant de z'=0 à z'=0,15.
- l'aube présente une première portion voisine de son pied, sur laquelle la position de l'épaisseur maximale par rapport à la corde reste sensiblement fixe et une deuxième portion s'étendant au-delà de la première portion et jusqu'à la tête de l'aube, sur laquelle la position de l'épaisseur maximale avance vers le bord d'attaque.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés, sur lesquels :
- la figure 1, déjà décrite, est une vue schématique en coupe longitudinale d'une turbomachine ;
- la figure 2 est une vue schématique partielle du redresseur de cette turbomachine ;
- la figure 3 est une vue d'une aube du redresseur, montrant l'empilement des sections d'aube ;
- la figure 4 est une coupe de l'aube dans l'une de ses sections ;
- la figure 5 est une courbe illustrant l'évolution de la position du bord d'attaque de l'aube sur sa hauteur ;
- la figure 6 représente, d'une part pour une aube selon l'invention (en traits pleins) et d'autre part pour une autre aube de redresseur (en traits interrompus), la répartition des épaisseurs le long de la corde pour différentes sections de l'aube ;
- la figure 7 représente, pour une aube selon l'invention, l'évolution de la position de l'épaisseur maximum par rapport à la corde, selon la hauteur de l'aube ;
- la figure 8 représente, d'une part pour une aube selon l'invention (en traits pleins) et d'autre part pour une autre aube de redresseur (en traits interrompus), l'évolution des pertes de pression de l'air au passage de l'aube, selon la hauteur de l'aube ; et
- la figure 9 montre l'évolution de l'écart du paramètre TBC par rapport au TBC cible en fonction de la hauteur de l'aube, pour une tranche de la hauteur totale dont les coordonnées adimensionnées z' sont comprises entre les valeurs z'1 et z'2, pour l'aube de l'invention (en trait plein) et pour deux autres aubes (en traits interrompus).

### Description détaillée de l'invention

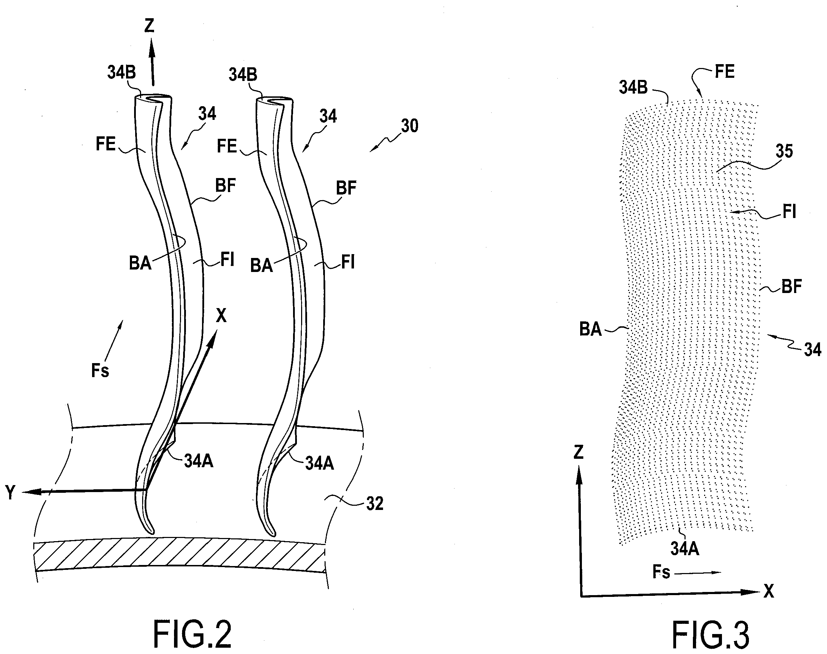

La figure 2 montre une partie du redresseur 30 de la turbomachine illustrée schématiquement sur la figure 1. Ce redresseur comprend une pluralité d'aubes 34, qui sont fixées par leurs pieds 34A au carter 28 par l'intermédiaire de l'anneau 32 et qui sont fixées par leurs têtes 34B au carter 10 (non représenté sur cette figure). Le pied et la tête sont respectivement l'extrémité radialement interne et l'extrémité radialement externe de l'aube, entre lesquelles s'étend le profil aérodynamique de l'aube.

On a indiqué sur la figure 2 le repère orthogonal X, Y, Z, l'axe X étant l'axe longitudinal parallèle à l'axe principal A de la turbomachine, qui est l'axe de rotation des turbines, l'axe Y étant l'axe tangentiel, et l'axe Z étant l'axe radial, définissant la direction de la hauteur des aubes.

Chaque aube présente un bord d'attaque BA et un bord de fuite BF, éloignés selon l'axe X, ainsi qu'une face extrados FE et une face intrados FI.

Comme on le voit sur la figure 3, chaque aube 34 est formée par une pluralité de sections d'aube 35 empilées selon l'axe Z, du pied 34A jusqu'à la tête 34B.

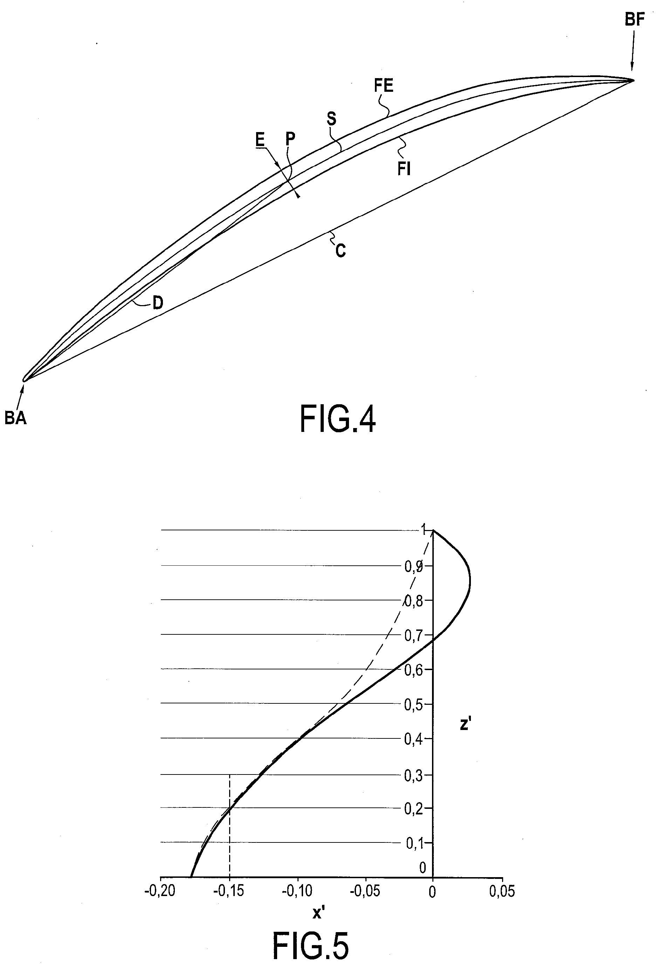

La coupe de la figure 4 est prise dans l'une des sections, dans un plan à Z constant. Pour cette section, on a indiqué la corde C de l'aube, qui est le segment rectiligne s'étendant entre le bord d'attaque BA et le bord de fuite BF. Par convention, on parcourt ce segment dans le sens allant du bord d'attaque jusqu'au bord de fuite. Sur la figure 4, on a indiqué l'épaisseur E de l'aube dans une région médiane de la section. Par convention, cette épaisseur E est la distance entre la face intrados FI et la face extrados FE, mesurée à une position de la section d'aube définie par un point P du squelette S de cette dernière, perpendiculairement au squelette S, ce squelette étant la ligne médiane entre les faces intrados FI et extrados DE. Ainsi, l'épaisseur E est mesurée à une position éloignée du bord d'attaque BA selon une distance D. La position de l'épaisseur maximale, définie en pourcentage de la longueur de corde C est donc définie par 100*D/C.

Il doit être entendu que les figures 2 à 4 sont fournies pour favoriser la compréhension de la structure globale du redresseur et de ses aubes. Ces figures n'illustrent pas nécessairement les critères dimensionnels spécifiques à l'invention, ayant trait, en particulier, à la position du bord d'attaque et à celle de l'épaisseur maximale.

La courbe en trait plein représentée sur la figure 5 est la trace du bord d'attaque, c'est-à-dire la courbe de l'évolution de la position en X du bord d'attaque de l'aube selon la hauteur (en Z) de cette dernière. Cette courbe est dessinée avec, en abscisses, la coordonnée x', soit x/Ht, c'est-à-dire la coordonnée x du point considéré du bord d'attaque BA selon l'axe X, adimensionnée par la hauteur totale Ht de l'aube et, en ordonnées, la coordonnée z', soit z/Ht, c'est-à-dire la coordonnée z du point considéré du bord d'attaque selon l'axe Z, adimensionnée par la hauteur Ht. La coordonnée d'origine z=0 ou z'=0 est définie au pied de l'aube, c'est-à-dire au niveau de la périphérie externe de l'anneau 32. La hauteur totale Ht est mesurée du pied à la tête de l'aube. La coordonnée d'origine x'=0 est définie comme étant la coordonnée x' du bord d'attaque au point z'=1, c'est-à-dire au point de hauteur maximale. La coordonnée x' va en augmentant vers le bord de fuite, selon l'axe X sur la figure 2.

On voit que, dans toute sa région inférieure, l'aube est « mise en avant ». En effet, la coordonnée x' reste négative sur toute la moitié inférieure de la hauteur de l'aube, dénommée « portion inférieure » s'étendant depuis le pied 34A jusqu'à 50% de la hauteur totale Ht (z'=0,5). Dans le cas d'espèce, la coordonnée x' est de l'ordre de -0,07 à z'=0,5.

On remarque également que, pour z'=0, x' est inférieure à -0,15, plus particulièrement de l'ordre de -0,175. De plus, sur toute la partie de la portion inférieure est comprise entre z'=0 et z'=0,3, la coordonnée x' reste inférieure ou égale à -0,1.

Dans l'exemple représenté, la coordonnée x' croît continûment à partir du pied, passe par une valeur nulle à environ 2/3 de la hauteur de l'aube et atteint une valeur maximum positive à environ 80 à 90% de la hauteur totale, avant de diminuer pour redevenir nulle à 100% de la hauteur maximale.

Selon une variante représentée par la courbe en traits interrompus, cette phase finale de diminution peut être supprimé, auquel cas la coordonnée x' croît continûment à partir du pied pour atteindre une valeur nulle ou sensiblement nulle à 100% de la hauteur maximale.

La courbe de la figure 5 se caractérise en particulier par une mise en avant jusqu'à 50% de la hauteur totale. Les inventeurs ont en effet constaté que, pour un redresseur dont les aubes présentent une telle mise en avant, les pertes aérodynamiques sont limitées par rapport à une aube classique, à empilage droit, c'est-à-dire pour laquelle la coordonnée x' du bord d'attaque est sensiblement constante sur toute sa hauteur.

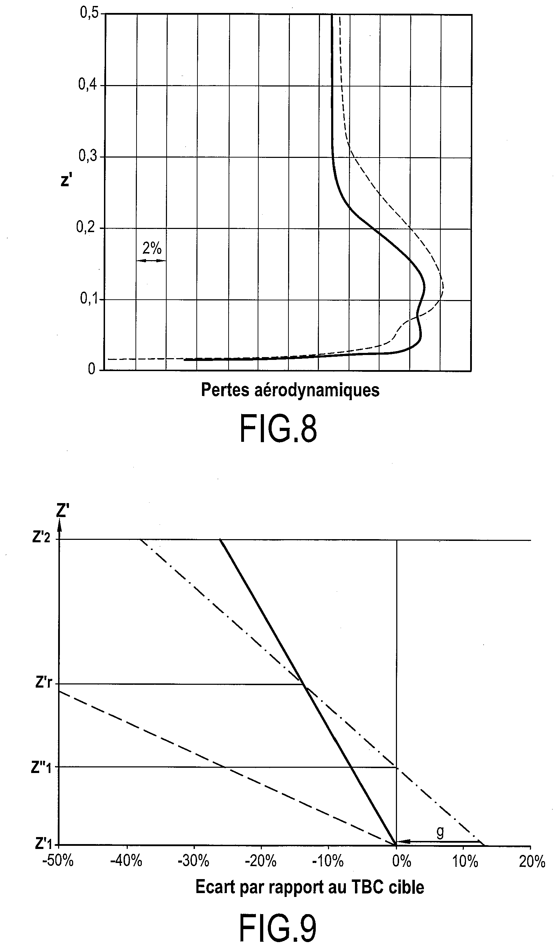

Ceci est particulièrement visible sur la figure 8, qui montre l'évolution des pertes aérodynamiques (en abscisses) en fonction de la coordonnée z' (en ordonnées). Cette évolution est montrée pour la portion inférieure de l'aube, jusqu'à z'=0,5, d'une part pour une aube présentant une telle mise en avant (trait plein) et d'autre part pour une aube à empilage droit (traits interrompus). On constate en particulier une amélioration très substantielle à partir d'environ 8% de la hauteur totale (z'=0,08), qui est de l'ordre de 1 à 2% en moyenne sur l'ensemble de la portion inférieure.

Les inventeurs ont constaté que, pour optimiser le comportement de l'aube ayant une telle mise en avant, il y a avantage à reculer la position de l'épaisseur maximale vers le bord de fuite pour la portion inférieure de l'aube. Ceci favorise en effet le comportement de l'aube à la torsion et à la flexion. La position de l'épaisseur maximale des différentes sections est déterminée en pourcentages de la longueur de corde.

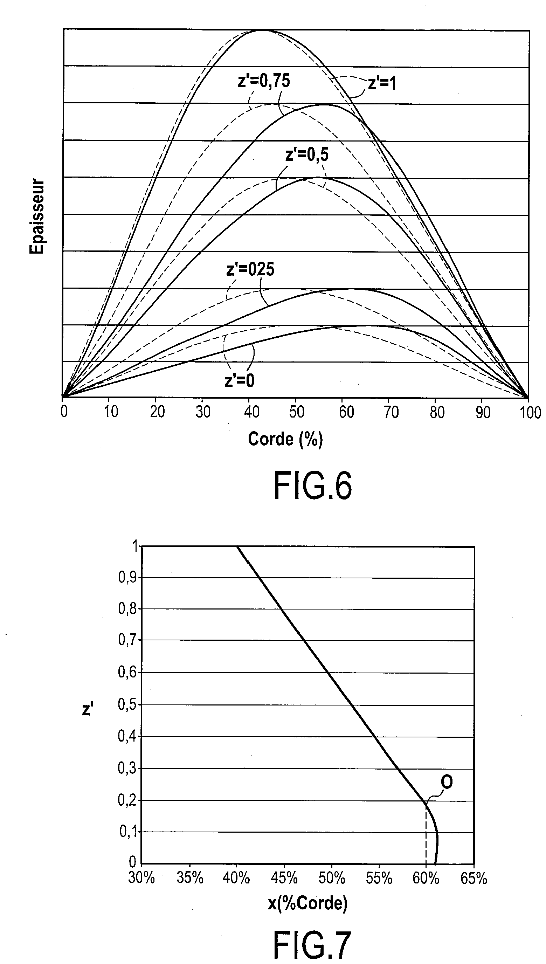

A cet égard, la figure 6 montre l'évolution des positions d'épaisseur maximale en fonction de la hauteur. Pour l'aube de l'invention d'une part (en trait plein), et pour une aube ayant une mise en avant similaire, mais avec des positions classiques d'épaisseur maximale d'autre part (en traits interrompus), la figure 6 montre 5 courbes de variation de l'épaisseur de l'aube, respectivement pour les sections z'=0, z'=0,25, z'=0,5, z'=0,75 et z'=1.

On voit que, jusqu'à 50% de la hauteur totale, l'épaisseur maximale est déportée vers le bord de fuite dans l'aube selon l'invention, par rapport à l'autre aube (le bord d'attaque et le bord de fuite se trouvent respectivement à 0% et à 100% de la corde).

Sur la figure 7, on voit que, pour z'=0, la position de l'épaisseur maximale est supérieure à 60% de la corde, plus précisément de l'ordre de 62% de la corde. La position de l'épaisseur maximale reste sensiblement à un niveau supérieur à 60% de corde jusqu'à z'=0,15, voire pratiquement jusqu'à z'=0,2. Sur cette portion allant de z'=0 à z'=0,15 voire z'=0,20, la position de l'épaisseur maximale reste sensiblement constante en restant par exemple dans une variation de l'ordre de 5% de corde. En l'espèce, la position de l'épaisseur maximale reste entre 60% et 65% de la corde jusqu'à z'=0,15.

Sur une deuxième portion qui s'étend au-delà de cette première portion en allant vers la tête de l'aube, la position de l'épaisseur maximale avance vers le bord d'attaque à mesure que la hauteur de l'aube augmente et, ce, jusqu'à sa tête. Sur cette deuxième portion, la position d'épaisseur maximale avance progressivement vers le bord d'attaque à mesure que z' augmente, pour atteindre en l'espèce environ 40 à 45% de la corde à la tête de l'aube (z'=1).

Sur la figure 9, l'écart par rapport au TBC cible est indiqué en abscisse, tandis que la coordonnée z' figure en ordonnée. Le TBC cible est l'origine des abscisses (valeur 0%) et l'on indique l'évolution de l'écart du TBC par rapport au TBC cible, en fonction de la hauteur, sur une tranche représentative de l'aube, entre les valeurs z'1 et z'2 pour la coordonnée z'.

On a représenté en traits interrompus réguliers l'évolution de l'écart entre le TBC constaté et le TBC cible pour une aube de l'art antérieur à empilage droit. Cet écart est acceptable, puisqu'il est négatif sur toute la tranche considérée.

La courbe en traits interrompus mixtes montre l'écart du TBC pour une aube mise en avant, ainsi qu'il a été défini précédemment, mais sans modification des positions des épaisseurs maximales, c'est-à-dire en conservant les distances constatées sur l'aube précédente, entre le bord d'attaque et les positions d'épaisseur maximale, pour chaque section de l'aube. On voit que l'écart est inacceptable entre les valeurs z'1 et z"1, puisqu'il devient positif sur cette tranche : le TBC est dégradé.

La courbe en trait plein montre l'écart du TBC pour une aube selon l'invention, sur la portion inférieure de laquelle (jusqu'à z'=0,5), non seulement le bord d'attaque est mis en avant, mais encore les positions d'épaisseur maximale sont distantes du bord d'attaque d'au moins 50% de la corde. On voit que, pour cette aube, l'écart de TBC est redevenu acceptable, puisqu'il reste négatif sur la tranche considérée.

On relève, pour la valeur z'1, située entre le pied de l'aube et une valeur z'r, qui correspond en l'espèce à une valeur médiane entre z'1 et z'2, un gain g qui correspond à une amélioration entre le TBC constaté et le TBC cible. Selon les cas, ce gain peut être de l'ordre de 10% d'écart de TBC.

La figure 9 s'intéresse à une tranche représentative de la hauteur de l'aube, sur laquelle le respect du critère TBC est jugé important. La valeur de référence z'r correspond sensiblement à la mi-hauteur de l'aube, la plus éloignée du pied de l'aube, fixé au carter intérieur 28 et de la tête de l'aube, fixée au carter extérieur 10. La tranche représentative allant de z'1 à z'2 peut par exemple couvrir 10% à 40% de la hauteur de l'aube.

Par ailleurs, les inventeurs ont constaté que l'aube pour laquelle l'écart du TBC est illustré en trait plein sur la figure 9 présente la même évolution des pertes aérodynamiques qu'illustré en trait plein sur la figure 8. Ainsi, en combinant le recul des positions des épaisseurs maximales à au moins 50% de la corde sur la portion inférieure de l'aube (z' compris entre 0 et 0,5), avec la mise en avant du bord d'attaque (coordonnée x' inférieure ou égale à 0), on réalise une aube, dont les performances aérodynamiques sont améliorées et dont le critère TBC est préservé.

## Revendications

1. Aube (34) de redresseur (30) de turbomachine (1) comportant une pluralité de sections d'aube (35) empilées entre un pied (34A) et une tête (34B) selon un axe radial Z qui définit la direction de la hauteur de l'aube, chaque section d'aube :
- s'étendant selon un axe longitudinal X entre un bord d'attaque (BA) et un bord de fuite (BF) et selon un axe tangentiel Y entre une face intrados (FI) et une face extrados (FE),
- ayant une corde (C) définie par la longueur du segment qui s'étend à partir du bord d'attaque (BA) jusqu'au bord de fuite (BF),
- ayant une épaisseur (E), définie par la distance entre les faces intrados et extrados, qui varie le long de la corde,
des coordonnées adimensionnées x' et z' étant définies pour chaque point de l'aube de coordonnées x, y, z selon les axes X, Y, Z, par les quotients x/Ht et z/Ht, où Ht représente la hauteur totale de l'aube, le bord d'attaque (BA) de l'aube à sa hauteur totale Ht définissant une coordonnée d'origine x'=0 à partir de laquelle la coordonnée x' augmente en allant vers le bord de fuite,
la coordonnée x' du bord d'attaque (BA) étant négative sur une portion inférieure de l'aube allant de z' = 0 à z' = 0,5,
**caractérisée en ce que**, sur ladite portion inférieure de l'aube allant de z' = 0 à z' = 0,5, les épaisseurs maximales sont mesurées à des positions éloignées du bord d'attaque (BA) d'au moins 50% de la corde (C).

2. Aube selon la revendication 1, **caractérisée en ce que**, pour la section de coordonnée z'=0, la coordonnée x' est inférieure ou égale à -0,15.

3. Aube selon la revendication 1 ou 2, **caractérisée en ce que** la coordonnée x' est inférieure ou égale à -0,1 sur une portion de l'aube allant de z'=0 à z'=0,3.

4. Aube selon l'une quelconque des revendications 1 à 3, **caractérisée en ce que** la coordonnée x' augmente continûment sur la portion inférieure de l'aube, à mesure que la coordonnée z' augmente.

5. Aube selon l'une quelconque des revendications 1 à 4, **caractérisée en ce que**, pour la section de coordonnée z'=0, l'épaisseur maximale est mesurée à une position éloignée du bord d'attaque (BA) d'au moins 60% de la corde.

6. Aube selon la revendication 5, **caractérisée en ce que** l'épaisseur maximale est mesurée à une position éloignée du bord d'attaque (BA) d'au moins 60% de la corde sur une portion de l'aube allant de z'=0 à z'=0,15.

7. Aube selon l'une quelconque des revendications 1 à 6, **caractérisée en ce que** l'aube (34) présente une première portion voisine de son pied (34A), sur laquelle la position de l'épaisseur maximale par rapport à la corde (C) reste sensiblement fixe et une deuxième portion s'étendant au-delà de la première portion et jusqu'à la tête (34B) de l'aube, sur laquelle la position de l'épaisseur maximale avance vers le bord d'attaque (BA).

8. Redresseur de turbomachine comprenant une pluralité d'aubes selon l'une quelconque des revendications précédentes.

9. Turbomachine comprenant au moins un redresseur selon la revendication 8.

## Patentansprüche

1. Schaufel (34) eines Leitrads (30) einer Turbomaschine (1), umfassend mehrere Schaufelabschnitte (35), die zwischen einem Fuß (34A) und einem Kopf (34B) entlang einer radialen Achse Z gestapelt sind, die die Richtung der Höhe der Schaufel definiert, wobei jeder Schaufelabschnitt:
- sich entlang einer Längsachse X zwischen einer Vorderkante (BA) und einer Hinterkante (BF) und entlang einer Tangentialachse Y zwischen einer Unterseite (FI) und einer Oberseite (FE) erstreckt,
- ein Seil (C) aufweist, das durch die Länge des Segments definiert ist, das sich von der Vorderkante (BA) bis zur Hinterkante (BF) erstreckt,
- eine Dicke (E) aufweist, die durch den Abstand zwischen der Unterseite und der Oberseite definiert ist, der entlang des Seils variiert,
wobei entdimensionierte Koordinaten x' und z' für jeden Punkt der Schaufel von Koordinaten x, y, z entlang der Achsen X, Y, Z durch die Quotienten x/Ht und z/Ht definiert sind, wobei Ht die Gesamthöhe der Schaufel darstellt, wobei die Vorderkante (BA) der Schaufel an ihrer Gesamthöhe Ht eine Ursprungskoordinate x' = 0 definiert, ausgehend von der die Koordinate x' zur Hinterkante hin zunimmt,
wobei die Koordinate x' der Vorderkante (BA) über einen unteren Abschnitt der Schaufel, der von z' = 0 bis z' = 0,5 geht, negativ ist,
**dadurch gekennzeichnet, dass** auf dem unteren Abschnitt der Schaufel, der von z' = 0 bis z' = 0,5 geht, die maximalen Dicken an Stellen gemessen werden, die von der Vorderkante (BA) um mindestens 50 % des Seils (C) entfernt sind.

2. Schaufel gemäß Anspruch 1, **dadurch gekennzeichnet, dass** die Koordinate x' für den Koordinatenbereich z' = 0 kleiner als oder gleich -0,15 ist.

3. Schaufel gemäß Anspruch 1 oder 2, **dadurch gekennzeichnet, dass** die Koordinate x' über einen Abschnitt der Schaufel, der von z' = 0 bis z' = 0,3 geht, kleiner als oder gleich -0,1 ist.

4. Schaufel gemäß einem der Ansprüche 1 bis 3, **dadurch gekennzeichnet, dass** die Koordinate x' über den unteren Abschnitt der Schaufel in dem Maße kontinuierlich ansteigt, wie die Koordinate z' ansteigt.

5. Schaufel gemäß einem der Ansprüche 1 bis 4, **dadurch gekennzeichnet, dass** die maximale Dicke für den Koordinatenbereich z' = 0 an einer Stelle gemessen wird, die von der Vorderkante (BA) um mindestens 60 % des Seils entfernt ist.

6. Schaufel gemäß Anspruch 5, **dadurch gekennzeichnet, dass** die maximale Dicke an einer Stelle, die von der Vorderkante (BA) um mindestens 60 % des Seils entfernt ist, über einen Abschnitt der Schaufel, der von z' = 0 bis z' = 0,15 geht, gemessen wird.

7. Schaufel gemäß einem der Ansprüche 1 bis 6, **dadurch gekennzeichnet, dass** die Schaufel (34) einen ersten Abschnitt in der Nähe ihres Fußes (34A), auf dem die Stelle der maximalen Dicke gegenüber dem Seil (C) im Wesentlichen fest bleibt, und einen zweiten Abschnitt aufweist, der sich über den ersten Abschnitt hinaus bis zu dem Kopf (34B) der Schaufel erstreckt, auf dem die Stelle der maximalen Dicke in Richtung der Vorderkante (BA) vorgeschoben ist.

8. Leitrad einer Turbomaschine, umfassend mehrere Schaufeln gemäß einem der vorhergehenden Ansprüche.

9. Turbomaschine, umfassend mindestens ein Leitrad gemäß Anspruch 8.

## Claims

1. A guide vane (34) for a set (30) of guide vanes of a turbine engine (1), the guide vane comprising a plurality of vane sections (35) stacked between a root (34A) and a tip (34B) along a radial axis Z that defines the height direction of the vane, each vane section:
• extending along a longitudinal axis X between a leading edge (BA) and a trailing edge (BF), and along a tangential axis Y between a pressure side face (FI) and a suction side face (FE);
• having a chord (C) defined by the length of the segment extending from the leading edge (BA) to the trailing edge (BF); and
• having a thickness (E) defined by the distance between the pressure side and suction side faces that varies along the chord;
dimensionless coordinates x' and z' being defined for each point of the vane of coordinates x, y, and z along the axes X, Y, and Z by the quotients x/Ht and z/Ht, where Ht represents the total height of the vane, the leading edge (BA) of the vane at its total height Ht defining a coordinate at the origin x'=0 from which the coordinate x' increases going towards the trailing edge;
the coordinate x' of the leading edge (BA) being negative over a bottom portion of the vane extending from z'=0 to z'=0.5, **characterized in that** over said bottom portion of the vane extending from z'=0 to z'=0.5, the maximum thicknesses are located at positions that are offset from the leading edge (BA) by at least 50% of the chord (C).

2. A vane according to claim 1, **characterized in that** for the section of coordinate z'=0, the coordinate x' is less than or equal to -0.15

3. A vane according to claim 1 or claim 2, **characterized in that** the coordinate x' is less than or equal to -0.1 over a portion of the vane going from z'=0 to z'=0.3.

4. A vane according to any one of claims 1 to 3, **characterized in that** the coordinate x' increases continuously over the bottom portion of the vane with increasing coordinate z'.

5. A vane according to any one of claims 1 to 4, **characterized in that** for the section of coordinate z'=0, the maximum thickness is located at a position offset from the leading edge (BA) by at least 60% of the chord.

6. A vane according to claim 5, **characterized in that** the maximum thickness is located at a position that is offset from the leading edge (BA) by at least 60% of the chord over a portion of the vane extending in the range z'=0 to z'=0.15.

7. A vane according to any one of claims 1 to 6, **characterized in that** the vane (34) presents a first portion close to its root (34A) over which the position of the maximum thickness relative to the chord (C) remains substantially constant, and a second portion extending beyond the first portion to the tip (34B) of the vane, over which the position of the maximum thickness advances towards the leading edge (BA).

8. An annular set of outlet guide vanes for a turbine engine comprising a plurality of vanes according to any preceding claim.

9. A turbine engine including at least one OGV set according to claim 8.
